# EUROPEAN PATENT APPLICATION

(11) **EP 3 064 476 A1**
(43) Date of publication of application: **07.09.2016**
(21) Application number: 16158905.6
(22) Date of filing: 07.03.2016
(51) Int. Cl.: C02F 1/40, C02F 1/24, E02B 15/04, E03F 5/16, B01D 17/02, C02F 101/32

(54) **SEPARATOR FOR THE SEPARATION OF OIL AND/OR GASOLINE FROM CONTAMINATED WATER**

(30) Priority: 06.03.2015 NL 2014408
(71) Applicant: PJ&BS Holding B.V., 5691 RH Son en Breugel (NL)
(72) Inventor: Belgers, Johannes Antonius Wouter, 5691 RH Son en Beugel (NL)
(74) Representative: Verhees, Godefridus Josephus Maria

(57) **Abstract**

A separator (1) has a concrete separation tank (3), which is closed at the top by a lid (5) and located at the level of the paving (6). The separation tank has an inlet (7) through which a pipe (9) supplies the contaminated water, and an outlet (11) through which a further pipe (13) discharges the (relatively clean) water into the sewer. In the separation tank there is a float (15), which opens and closes/shuts-off the outlet in accordance to the water level (17) in the separation tank and the thickness of floating layer of oil and/or gas (19).

The separator further has a skimmer (21), which is built in the separation tank (3). In periodically skimming the floating layer of oil and gasoline on the water, the skimmer feeds the oil through a conduit (23) down to the storage tank (25).

## Description

### Field of The Invention

The present invention relates to a separator for the separation of oil and/or gasoline from contaminated water; comprising:
- a separation tank having a wall,
- an inlet being in the wall for the oil and/or gasoline contaminated water and,
- an outlet being in the wall for the resulting water which substantially is stripped of the majority of contaminants,
- a separation tank that has a discharge tube connected to the outlet, and
- a supply tube connected to the inlet.

In most instances, the open end of the discharge tube is located under the level of the outlet within the separation tank.

### Description of the Prior Art

Such a separator is generally known. In the known separator, there is a float in the separation tank which closes the open end of the discharge tube provided the oil/gasoline layer becomes too thick. If the water level drops, the float will drop correspondingly. Therefore, if the water level drops below the level of the open end of the discharge tube, the float will seal the opening in order to prevent the floating layer of oil and/or gasoline from flowing into and out of the discharge tube. The existing separation tank is periodically emptied, typically once a year or earlier, if, the floating layer of oil and gasoline reaches the maximum level of thickness. Here by, the separation tank is completely drained, and the contaminated water contained in the separation tank will be removed; after which, the separation tank has to be cleaned. The removal of the oil-gasoline-water mixture entails costs, and will still be separated elsewhere.

There have been several attempts to reduce the costs of removing and cleaning the apparatus. For example, by binding or absorbing the layer of oil and gasoline, and then, only to periodically remove the bound/absorbed oil and gasoline, which then permits the water to stay in the separation tank, provided bacteria that eat the oil/gasoline have been added, etc. In addition, the factors relating to the environment within the separation tank are also significant, for example the area above the water/oil level. This region is known as a so-called ATEX 0 zone; where, if, there are explosive vapours surrounded or nearby electrical/ conductive components there is a potential to cause a spark. There are therefore few components that may be used in these environments; however, none of the tested methods have resulted in an effective and cheap operating device/apparatus.

A further disadvantage of the existing separator, is the fact that in the instance of torrential rain, the separation tank and the connecting sewage pipe overflows, whereby the floating layer of oil and/or gasoline (alongside the excess rainwater) flows out of the separation tank; therefore contaminating the surrounding environment. Thus, to prevent future contamination and overflow during heavy downpours of rain, the separation tank must be built around four times as large as the existing tanks. Further, the existing separation tanks must be replaced, due to the fact that existing tanks do not accommodate the current environmental conditions. Nevertheless, even if all tanks are replaced, in the instance of exceptionally heavy downpours of rain, the separation tanks will still overflow, with the oil layer/contaminants flowing through the drainage system and flooding the surrounding environment.

### Summary of the Invention

An objective of the invention is to provide a separator of the type described in the opening paragraph of which the annual costs are lower than of the existing separator, and whereby in a downpour of rain no impurities/contaminants can pass into the surroundings. To this end the separator according to the invention further comprises a storage tank for oil and/or gasoline, as well as a skimmer, with matching engineering to allow immediate removal of the floating oil and/or gasoline layer during torrential rain therefore reducing the risk of flooding and environmental contamination. The removal of the floating layer of oil and/or gasoline includes its separation from the water within the separation tank, which is then followed by its discharge via a discharge tube into the storage tank, where it will be periodically stored. Therefore, as the floating layer of oil and gasoline is only periodically stored, the storage tank only has to be emptied when it is almost full. Due to the fact the oil and gasoline in the storage tank is so good as pure, it can be sold; thus its removal/disposal is without any costs. Subsequently, the liquid in the separation tank will as a result always be without a floating layer of oil and/or gasoline, or at the most, a minimally thin layer of oil and/or gasoline floating on the water, so that there will be no or little contamination out of the separator during a downpour.

As the separation tank is likely to have fewer to no contaminants existent in its outflowing liquid, due to the regular removal of the floating layer of oil and gasoline, the separation tank therefore requires less frequent or no cleaning. As a result, there is also little or no risk of contamination of the environment via leakage. Furthermore, the removal of sediment in the separation (usually once every ten years) will cost less, because the sediment will be much cleaner. In addition, the separator should function better with fewer disruptions; due to the fact they are being kept in optimal/clean conditions during operations. Consequently, this also overrides the need for an annual or semi-annual inspection. Although normally after cleaning the separation tank gets filled with clean tap water, this is also now unnecessary, because the water remains in the separation tank. Thus, these additional costs will no longer be incurred. Moreover, upon inspection tests (i.e. pressure testing to check the separation tank is liquid-tight) the separation tank does not have to be cleaned in advance, as the separation tank is kept continuously clean.

An embodiment of the separator according to the present invention is charactereised in that a float is present in the storage tank, which float emits a signal if the storage tank is nearly full and needs to be emptied. This float is located at a level that provides a margin of safety before the tank is completely full, so that it need not be emptied immediately.

A further embodiment of the separator according to the invention is characterised in that a further float is present in the storage tank, which further float emits another signal when the tank is full and the supply of oil should be closed. The supply can be closed either by shutting down the drainage line and thus the supply of oil and/or ensuring that the skimmer is not activated. This further float is located at a higher level than the previous float, and switches off the skimmer in order to avoid that the storage tank may run over.

Yet a further embodiment of the separator according to the invention is characterised in that there is a safety float present in the separation tank, which safety float closes the discharge line of the skimmer to the storage tank if the water level in the separation tank reaches the level of the discharge line. If, due to heavy rainfall, a lot of water passes through the separator, there is the possibility that the water temporarily rises in the separation tank; thus placing the skimmer under water. Therefore, in order to avoid water flowing into the storage tank, there is a float valve located in the separation tank.

A favourable embodiment of the separator according to the invention, with which the presence of oil/gasoline can be determined in the water (via a light source and sensor) in the separation tank, is characterised in that the light sensor perceives the light passing through the oil layer, and is coupled to the control unit/regulator, which in turn is connected to the skimmer. However, the skimmer is only activated via the control unit, if, the amount of light sensed by the light sensor is below a pre-set limit. As the floating layer of oil and/or gasoline becomes thicker, less light will be able to pass through. As a result, the amount of light measured by the light sensor is therefore an indication of the thickness of the layer of oil and/or gasoline. If this layer becomes too thick, the skimmer will be activated for a set period of time in order to remove the layer of oil/gasoline.

The light source may hereby be on one side of the surface and the light sensor on the other side. Preferably, however, both the light source and the light sensor are located under the outlet, and during operation below the water surface. Further, there is a mirror in the separation tank (which in contrast to the light sensors, is located above the outlet). This mirror should be present above the water surface during operation; whereby the mirror is positioned in such a way that the light from the light source falls on the mirror and is then reflected by the mirror to the light sensor. In this embodiment, the electrical components are not included in the ATEX 0 zone above the water, thus they do not have to conform to the applicable demands.

Yet a further embodiment of the separator in accordance with the present invention, is characterised in that the separator comprises a battery and a solar panel for the periodic supply of power to the skimmer. The battery, which is recharged again via this solar panel, powers the skimmer (which only works when needed i.e. when there is a minimum-floating layer of oil/gasoline); therefore, there is no need for a fixed power supply to be present. Furthermore, the skimmer has been engineered so that it can be installed in any existing separator.

### Brief description of the Drawings

Below, the invention, and its embodiments, will be explained in more detail with reference to the drawings of the separator according to the present invention. In these drawings:
Figure 1 shows an embodiment of the separator according to the present invention, shown schematically;
Figure 2 is a partly cut-away perspective view of the separation tank of the separator shown in Figure 1;
Figure 3 shows the skimmer of the separator (as shown in Figure 1) in perspective;
Figure 4 represents a second embodiment- in a partly cutaway view-of the separator according to the present invention;
Figure 5 shows the separator shown in Figure 4 during the inflow of polluted/contaminated water;
Figure 6 represents a separation tank of a third embodiment of the separator, according to the present invention, upon which a floating oil layer can be seen on the water;
Figure 7 shows the separation tank shown in Figure 6, after the skimmer has removed the floating layer of oil;
Figure 8 is a separation tank of a fourth embodiment of the separator according to the present invention, upon which a floating oil layer can be seen on the water;
Figure 9 shows the separation tank, shown in Figure 8, after the skimmer has removed the layer of oil;
Figure 10, represents the existing separator during a downpour of rain: illustrating how it operates during these conditions; and in contrast
Figure 11 illustrates how the separator (shown in Figure 4) according to the present invention, operates during a downpour of rain.

### Detailed description of the Invention

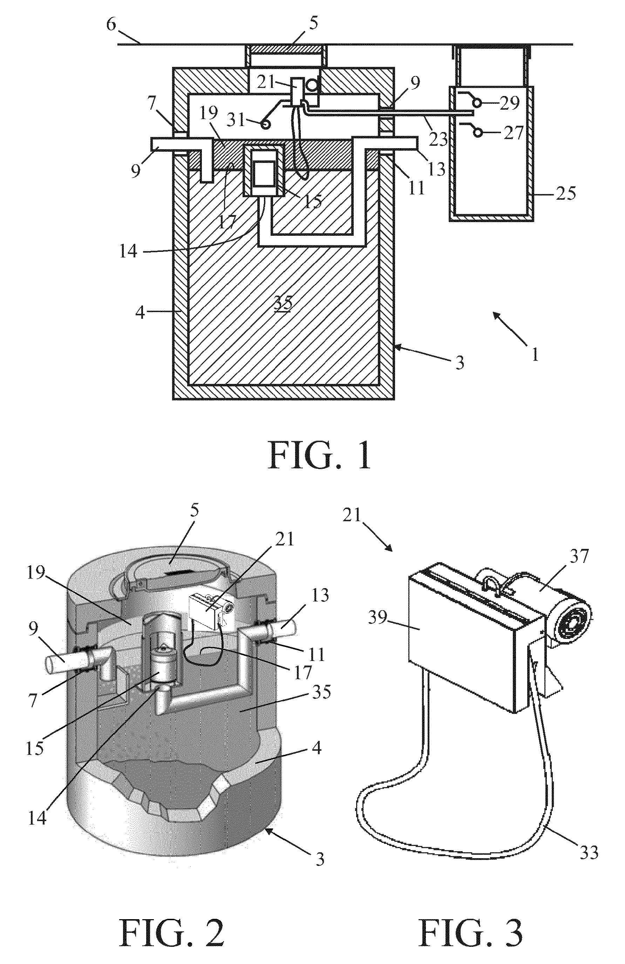

In Figure 1, the first embodiment (according to the present invention) of the separator is shown in a schematic drawing. The separator (1) has a separation tank (3) with a concrete wall (4), which comprises an inlet (7), through which a supply conduit (9) delivers the contaminated water, and an outlet (11), through which a discharge tube (13) discharges the water (which is by now relatively clean) to the sewer. The separation tank is closed at the top by a lid (5), which is located at the level of the pavement (6). In the separation tank there is a float (15), which opens and closes the outlet (14) of the discharge pipe in correspondence to the water level (17) and thickness of the floating layer of oil and/or gasoline (19) in the separation tank.

Furthermore, the separator has a skimmer (21), which is built in the separation tank (3). In periodically skimming the floating layer of oil and gasoline on the water, the skimmer feeds the oil through a conduit (23) down to the storage tank (25).

In the storage tank (27), a float is present, which emits a signal if the storage tank (25) is nearly full and needs to be emptied. This float is located at a level that provides a margin of safety before the tank is full, so that it need not be emptied immediately. Furthermore, in the storage tank (25), there is another float (29), which emits a further signal when the tank is full and the supply of oil should be sealed/closed off. This third float is located at a higher level than the second float (27), and switches off the skimmer (21) in order to prevent the storage tank from overflowing.

In the separation tank (3), there is an additional safety float (31) present. This safety float shuts-off the discharge line (23) of the skimmer (21) (which leads to the storage tank (25)), if, the water level in the separation tank reaches the level of the discharge line. This is done in order to avoid the influx of water in the storage tank, in the instance that the skimmer is placed under water due to heavy downpours of rain.

In Figure 2, the separation tank (3) is a partly cut-away perspective of the present invention. The float (15) opens the inlet to the pipe (13) as soon as the water level (17) has reached a certain level in the separation tank, so that water under the oil/gasoline layer (19) can be discharged into the sewer via the pipeline. If the water level (17) drops below a certain height, the float (15) once again closes the inlet to the corresponding pipe (13).

In Figure 3, the skimmer (21) is shown in perspective. The skimmer has an endless hose/tube (33), which extends through the oil/gasoline layer (19) into the water (35). During operation, this tube is driven around a moving wheel by an electric motor (37), so that the tube is driven in a continuous circular movement. Throughout this circular movement, the tube passes through the oil/gasoline layer, during which collecting the oil and gasoline as it adheres to the hose. The oil and gasoline will then be scrapped off the skimmer hose at the housing location (39) and collected in a funnel; upon which the discharge tube (23) leading to the storage tank (25) is connected. The separator further comprises a solar panel, which is connected to the battery (not shown), which periodically supplies the skimmer with power.

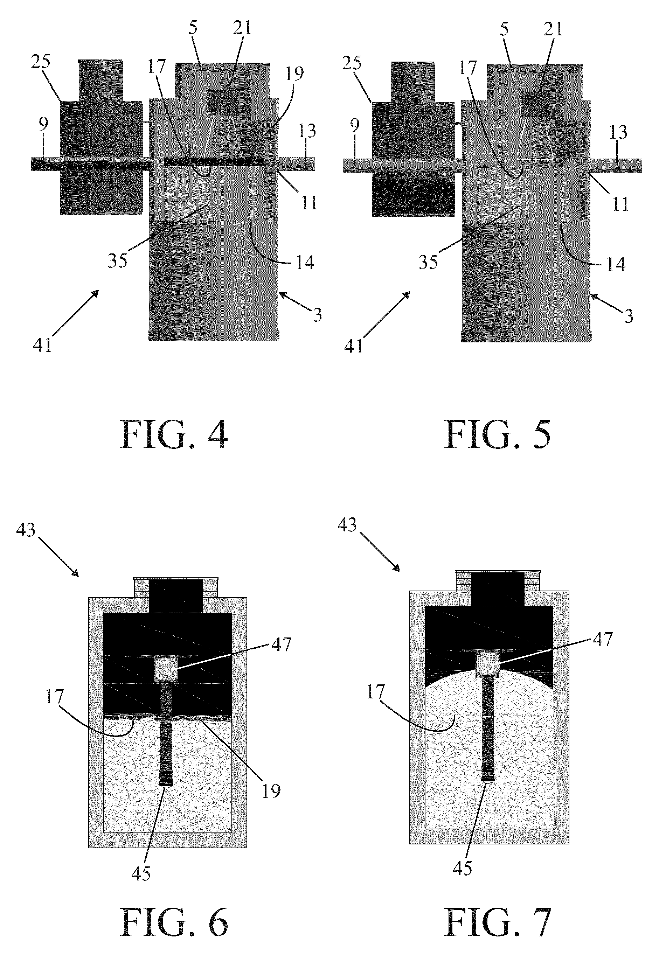

In Figures 4 and 5, the second embodiment of the separator according to the present invention, is shown in a partly cut-away view, respectively, after the removal of the floating oil layer. In this separator (41), there is no float on the water that controls the outflow of the non-contaminated water via the discharge tube (13). However, here, the inlet (14) of the discharge tube itself is below the level of the outlet (11); thus ensuring that only the water (and not the floating layer of oil/gasoline) can flow into the discharge tube.

In Figures 6 and 7, the separation tank of the third embodiment of the separator according to the present invention is shown again, respectively, once again, after the removal of the oil layer from the water. In this separation tank (43), there is a light source (45) located under the water surface (17), and a light sensor (47) located above the water surface. As the layer of floating oil and/or gasoline (19) becomes thicker, less light will be able to pass through this layer. The amount of light measured by the light sensor (47), therefore acts an indication of the thickness of the layer of floating oil and/or gasoline (19). Once this layer is too thick, a regulator/control unit-which is coupled with both the skimmer (not shown in these figures) and the light sensors-will activate the skimmer for a pre-set period of time in order to remove the oil layer from the water.

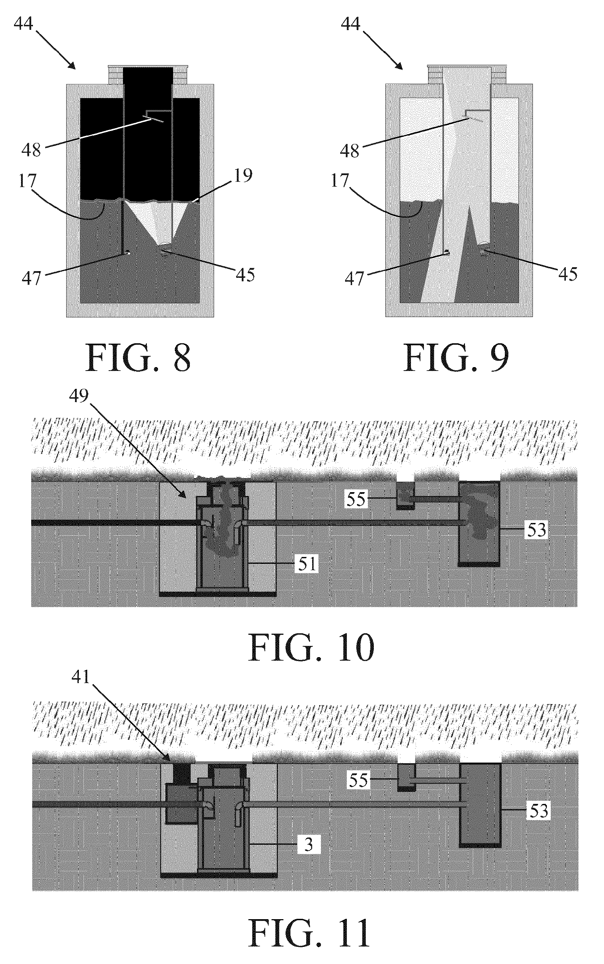

In Figures 8 and 9, the separation tank of a fourth embodiment of the separator according to the present invention is shown, respectively, once again after the removal of the oil layer. In this separation tank (44), both the light source (45) and the light sensor (47) are located under the water surface (17), whereas the mirror (48) is located above the water surface. The light beam (which is derived from the light source) is directed onto the mirror, and the mirror is, in turn, directed on the light sensor, thus directing the reflected light onto the light sensor. The light beam therefore passes through the water surface twice; therefore, whilst using the same apparatus this allows a thinner oil/gasoline layer to be observed.

To illustrate the advantage of the separator (41) according to the present invention, relative to the existing separator, Figures 10 and 11 illustrate how the two separators operate during conditions of heavy/torrential rainfall. In the existing separator (49), see figure 8, the separation tank (51) and the corresponding sewer (53) and wells (55) overflow during heavy rainfall; with the oil layer present in the separator tank flowing out of the tank, via both the separator tank's lid and the connected sewers and wells and into the surrounding environment. However, during heavy rainfall, the separator (41) according to the present invention, see Figure 9, illustrates that although the water in both the separation tank (3) and the connecting sewer (53) and wells (55) will overflow into the surroundings, no oil or containments will discharge into the environment; due to the fact the separator ensures that there will be no floating layer of oil and/or gasoline present on the water during such conditions.

Although in the above, the present invention is elucidated with reference to the drawings, it should be noted that the present invention is in no way limited to the embodiments shown in the drawings. The invention therefore extends to all embodiments deviating from the drawings within the context defined by the claims.

## Claims

1. A separator for the separation of oil and/or gasoline from contaminated water, comprising:
- a separation tank (3) having a wall (4),
- an inlet (7) being in the wall for the oil and/or gasoline contaminated water and,
- an outlet (11) being in the wall for the resulting water which substantially is stripped of the majority of contaminants,
- a separation tank that has a discharge tube (13) connected to the outlet, and
- a supply tube (14) connected to the inlet,
**characterised in that** the separator further comprising a storage tank (25) for oil and/or gasoline components, as well as a skimmer (21) present in the separation tank (3), which periodically removes/separates the floating layer of oil and gasoline (19) from the water (35) and discharges it into the storage tank (25) via a discharge line (23).

2. A separator according to claim 1, **characterised in that** the float (27) present in the storage tank emits a signal when the storage tank (25) is almost full and needs to be emptied.

3. A separator according to claim 2, **characterised in that** the other float (29) present in the storage tank (25), emits a further signal when the tank is full and the supply of oil should be closed/sealed.

4. A separator according to claim 1, 2 or 3, **characterised in that** the a safety float (31) present in the separation tank (3), closes the discharge pipe of the skimmer (21) to the storage tank (3), if, the water level (17) in the separation tank reaches the level of the discharge line.

5. A separator according to any one of the preceding claims, **characterised in that** the separator comprises a light source (45) present in the separation tank (3) which radiates light to the surface and a light sensor (47) present in the separation tank (3) which detects/perceives light passing through the oil layer, whereby the light sensor is connected to a control unit, which in turn, is coupled to the skimmer (21), through which the control unit activates the skimmer if the quantity light detected by the light sensor is below a pre-set limit.

6. A separator according to claim 5, **characterised in that** the light source (45) and the light sensor (47) are both present under the outlet and during operation located below the water surface, and further, that the mirror (48) present in the separation tank, is located above the outlet and during operation located above the water surface, whereby the mirror is positioned in such a way that light from the light source falls on the mirror and is then reflected by the mirror to the light sensor.

7. A separator according to any one of the preceding claims, **characterised in that** the separator comprises a solar panel and a battery for the periodic supply of power for the skimmer.
